# EUROPEAN PATENT APPLICATION

(11) **EP 4 779 723 A1**
(43) Date of publication of application: **22.07.2026**
(21) Application number: 24875673.6
(22) Date of filing: 15.10.2024
(51) Int. Cl.: H01M 4/62, H01M 4/133, H01M 4/134, H01M 4/38, H01M 4/485, H01M 4/587, H01M 10/0525

(54) **SECONDARY BATTERY, ELECTRICAL DEVICE AND BINDER**

(30) Priority: 20.08.2024 CN 202411144321
(71) Applicant: Contemporary Amperex Technology (Hong Kong) Limited, Central, Hong Kong (HK)
(72) Inventor: ZHANG, Wenmeng, Ningde, Fujian 352100 (CN); CHEN, Shuhua, Ningde, Fujian 352100 (CN); LIU, Huihui, Ningde, Fujian 352100 (CN); FAN, Zhengbing, Ningde, Fujian 352100 (CN); CHEN, Linhui, Ningde, Fujian 352100 (CN); ZUO, Huanhuan, Ningde, Fujian 352100 (CN)
(74) Representative: Jacob, Reuben Ellis
(86) International application number: PCT/CN2024/124930
(87) International publication number: WO 2026/040186

(57) **Abstract**

This disclosure provides a secondary battery, an electric apparatus, and a binder. The secondary battery includes a positive electrode plate, a negative electrode plate, and a separator. The negative electrode plate includes a negative electrode current collector and a negative electrode film layer disposed on at least one surface of the negative electrode current collector. The negative electrode film layer includes a negative electrode active material and a first binder. A mass percentage of the negative electrode active material in the negative electrode film layer is 96%-98.4%, and a mass percentage of the first binder in the negative electrode film layer is 0.5%-3%. The first binder includes a polymer, and the polymer includes -COOM, -CONH₂, -CN, and - COOR, where M represents an alkali metal, and R represents substituted or unsubstituted C₁-C₂₀ alkyl.

## Description

### CROSS-REFERENCE TO RELATED APPLICATIONS

This disclosure is filed based on Chinese Patent Application No. 202411144321.9, filed on August 20, 2024 and entitled "SECONDARY BATTERY, ELECTRIC APPARATUS, AND BINDER", and claims priority to this Chinese patent application, which is incorporated herein by reference in its entirety.

### TECHNICAL FIELD

This disclosure relates to the field of battery technologies, and particularly, to a secondary battery, an electric apparatus, and a binder.

### BACKGROUND

In recent years, with increasingly wide use of secondary batteries, secondary batteries have been widely used in energy storage power supply systems such as hydroelectric power plants, thermal power plants, wind power plants, and solar power plants, and many other fields including electric tools, electric bicycles, electric motorcycles, electric vehicles, and aerospace.

Due to significant advancements in secondary batteries, higher demands have been placed on the energy density of secondary batteries.

### SUMMARY

This disclosure is made in view of the above issues, and an objective thereof is to provide a secondary battery, an electric apparatus, and a binder. The secondary battery in this disclosure has an improved energy density without deteriorating processing performance.

To achieve the above objectives, this disclosure provides a secondary battery including a positive electrode plate, a negative electrode plate, and a separator. The negative electrode plate includes a negative electrode current collector and a negative electrode film layer disposed on at least one surface of the negative electrode current collector. The negative electrode film layer includes a negative electrode active material and a first binder. A mass percentage of the negative electrode active material in the negative electrode film layer is 96%-98.4%, and a mass percentage of the first binder in the negative electrode film layer is 0.5%-3%. The first binder includes a polymer, and the polymer includes -COOM, -CONH₂, -CN, and -COOR, where M represents an alkali metal, and R represents substituted or unsubstituted C₁-C₂₀ alkyl.

In this disclosure, the -COOM, -CONH₂, -CN, and -COOR groups in the polymer impart a negative charge to the polymer, causing a repulsive force between different chain segments of the polymer. This allows the polymer to stretch in a solution and the chain segments to intertwine with each other, improving a binding force of the first binder, thereby improving viscosity of a negative electrode slurry and improving stability of the slurry. The -COOM group is hydrophilic and therefore beneficial to dispersibility of the negative electrode slurry. -CONH₂ (amide) can regulate a polymerization reaction, leading to a polymer with suitable weight-average molecular weight, viscosity, and solid content, and good stability. -CN (nitrile) is a strong polar group that helps to increase an interactive force between the first binder and other substances, thereby increasing a binding force of the first binder. An alkyl side chain of -COOR (ester) is hydrophobic, forming better affinity with the negative electrode active material, thereby better covering the negative electrode active material. In addition, the hydrophilicity of -COOM and the hydrophobicity of -COOR are beneficial to improving dispersibility of the negative electrode slurry. Additionally, the alkyl side chain of -COOR (ester) can increase the flexibility of the negative electrode slurry, and reduce stress shrinkage of the coating layer during coating at high temperature, thereby alleviating phenomena such as coating cracking and tab wrinkling of the negative electrode film layer. Therefore, the first binder in this disclosure has excellent thickening property, binding property, plasticity, and dispersibility. The use of the first binder enables an increase in the mass percentage of the negative electrode active material in the negative electrode active film layer without affecting the processing performance of the secondary battery while reducing the total amount of the binder. That is, this improves the energy density of the secondary battery in this disclosure without deteriorating the processing performance.

In some embodiments, M includes one or more of Li, Na, and K.

In some embodiments, the first binder includes a structural unit derived from a monomer represented by formula 1, a structural unit derived from a monomer represented by formula 2, a structural unit derived from a monomer represented by formula 3, and a structural unit derived from a monomer represented by formula 4: 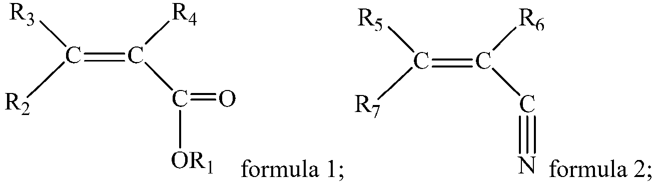 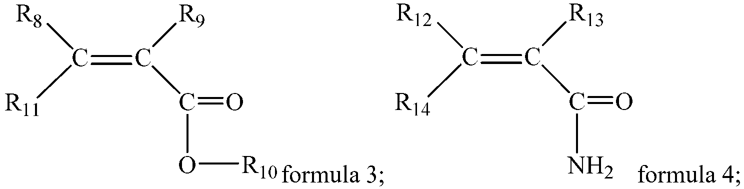 where R₁ includes hydrogen or an alkali metal; and R₂, R₃, R₄, R₅, R₆, R₇, R₈, R₉, R₁₁, R₁₂, R₁₃, and R₁₄ each independently include hydrogen or substituted or unsubstituted C₁-C₆ alkyl; and R₁₀ includes substituted or unsubstituted C₁-C₂₀ alkyl.

In some embodiments, R₁ includes hydrogen; and/or R₂, R₃, R₄, R₅, R₆, R₇, R₈, R₉, R₁₁, R₁₂, R₁₃, and R₁₄ each independently include hydrogen; and/or R₁₀ includes substituted or unsubstituted C₆-C₁₂ alkyl.

The structural unit (acrylic acid structural unit) of the monomer represented by formula 1 in the first binder is hydrophilic, which is beneficial to improving the dispersibility of the negative electrode slurry. In addition, the structural unit of the monomer represented by formula 1 can further provide a lithium ion transport channel. In the first binder, an increase in the number of these structural units can increase active ion transport channels, improving the transport speed of active ions, thereby improving the charging capacity of the secondary battery. Additionally, with the structural unit (acrylonitrile structural unit) derived from the monomer represented by formula 2 introduced in the first binder, a strong polar group is introduced, improving an interactive force between the binder and other substances, thereby improving a binding force of the polymer. Because an alkyl side chain of an ester group is hydrophobic, the introduced structural unit (acrylate structural unit) derived from the monomer represented by formula 3 forms better affinity with the negative electrode active material, thereby better covering the negative electrode active material, and helping to improve the dispersibility of the negative electrode slurry. In addition, a long side chain group in the structural unit derived from the monomer represented by formula 3 reduces interaction between molecular chain segments of the polymer, making rotation in a single bond easier. This improves the flexibility of the prepared slurry, reducing stress shrinkage of the coating layer during coating, thereby reducing issues such as cracking and tab wrinkling. Introducing the structural unit (acrylamide structural unit) derived from the monomer represented by formula 4 can regulate a polymerization reaction to obtain a polymer with suitable weight-average molecular weight, viscosity, and solid content, and good stability. Therefore, the first binder in this disclosure has excellent thickening property, binding property, plasticity, and dispersibility.

In some embodiments, in the first binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (2-5):(1-4):(1-4):(0.5-3). This helps to obtain a multifunctional first binder with suitable thickening property, binding property, plasticity, and dispersibility.

In some embodiments, in the first binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (3-5):(2-4):(2-4):(0.5-2). This helps to obtain a multifunctional first binder with more suitable thickening property, binding property, plasticity, and dispersibility.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 3 is 10%-40%. Therefore, the first binder possesses suitable hydrophobicity and flexibility, which is beneficial to improving the dispersibility and flexibility of the negative electrode slurry, thereby improving the processing performance of the secondary battery.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 1 is 20%-50%. This helps to obtain a polymer with suitable hydrophilicity and viscosity, and helps to improve the dispersibility and binding property of the negative electrode slurry.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 2 is 10%-40%. This helps to obtain a polymer with suitable binding property, and helps to improve the binding property of the negative electrode slurry.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 4 is 5%-30%. This helps to obtain a polymer with suitable weight-average molecular weight, viscosity, and solid content, and good stability, improving the processing performance of the secondary battery.

In some embodiments, a weight-average molecular weight of the polymer is 200,000-1,500,000. This helps to improve the binding property and structural stability of polymer molecules.

In some embodiments, the mass percentage of the negative electrode active material in the negative electrode film layer is 97.0%-97.9%. This ensures that a loading amount of the negative electrode plate is within a suitable range, helping to balance the energy density and processing performance of the secondary battery.

In some embodiments, the mass percentage of the first binder in the negative electrode film layer is 0.5%-2%. This achieves significant binding effects with a small amount of binder, without affecting the processing performance of the secondary battery.

In some embodiments, the negative electrode film layer further includes a second binder; and a total mass percentage of the first binder and the second binder in the negative electrode film layer is 1%-3%. This first ensures that the viscosity of the negative electrode slurry is within a suitable range, and second, allows for a high proportion of the negative electrode active material, helping to balance the processing performance and energy density of the secondary battery.

In some embodiments, the mass percentage of the second binder in the negative electrode film layer is 0.5%-3%. This helps to improve the binding performance of the negative electrode plate.

In some embodiments, the second binder includes a styrene-butadiene rubber binder and/or a polyacrylic binder. The styrene-butadiene rubber binder and/or polyacrylic binder has advantages such as high viscosity and good stability, and therefore is beneficial to the processing performance of the secondary battery when used as a binder in the negative electrode film layer.

In some embodiments, the negative electrode film layer further includes a dispersant; and a total mass percentage of the first binder and the dispersant in the negative electrode film layer is 0.5%-2%. This first ensures that the filtration speed of the negative electrode slurry is within a suitable range, and second, allows for a high proportion of the negative electrode active material, helping to balance the processing performance and energy density of the secondary battery.

In some embodiments, the mass percentage of the dispersant in the negative electrode film layer is 0-2%. In this way, the dispersant plays a good suspending and dispersing role for particles of the negative electrode active material, the conductive agent, and the like during preparation, ensuring that the negative electrode slurry has a viscosity and filtration speed within a suitable range, and that the negative electrode slurry has high stability. This is beneficial to the processing performance of the secondary battery.

In some embodiments, in the negative electrode film layer, a total mass percentage of the first binder, the second binder, and the dispersant is 1.5%-2.5%. This balances the processing performance and energy density of the secondary battery.

In some embodiments, the negative electrode film layer further includes a conductive agent; and a mass percentage of the conductive agent in the negative electrode film layer is 0.1%-2%. This helps to improve a loading amount of the negative electrode plate, thereby further improving the energy density of the secondary battery.

In some embodiments, the negative electrode active material includes one or more of artificial graphite, natural graphite, soft carbon, hard carbon, silicon-based material, tin-based material, and lithium titanate.

A second aspect of this disclosure provides an electric apparatus including the secondary battery according to the first aspect.

A third aspect of this disclosure provides a binder, including a polymer, where the polymer includes -COOM, -CONH₂, -CN, and -COOR, where M includes an alkali metal, and R includes substituted or unsubstituted C₁-C₂₀ alkyl.

In this disclosure, the binder including -COOM, -CONH₂, -CN, and -COOR imparts a negative charge to the polymer, causing a repulsive force between different chain segments of the polymer. This allows the polymer to stretch in a solution and the chain segments to intertwine with each other, improving the binding force and thickening effect of the binder. -COOM is hydrophilic and therefore beneficial to improving dispersibility of a dispersing system. -CONH₂ (amide) can regulate a polymerization reaction, leading to a polymer with suitable weight-average molecular weight, viscosity, and solid content, and good stability. -CN (nitrile) is a strong polar group that helps to increase an interactive force between the polymer and other substances, thereby increasing a binding force of the binder. Hydrophobic -COOR is beneficial to improving dispersibility of a dispersing system. Additionally, R in -COOR includes C₁-C₂₀ alkyl, providing the polymer with a long alkyl side chain, thereby improving the flexibility of the binder. Therefore, the binder in this disclosure has excellent binding property, thickening property, plasticity, and dispersibility.

In some embodiments, the binder includes a structural unit derived from a monomer represented by formula 1, a structural unit derived from a monomer represented by formula 2, a structural unit derived from a monomer represented by formula 3, and a structural unit derived from a monomer represented by formula 4: 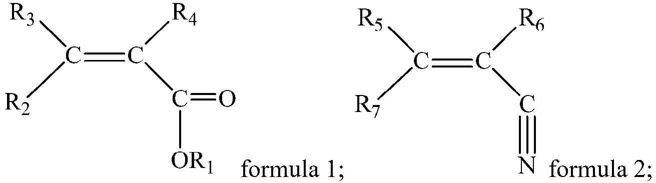 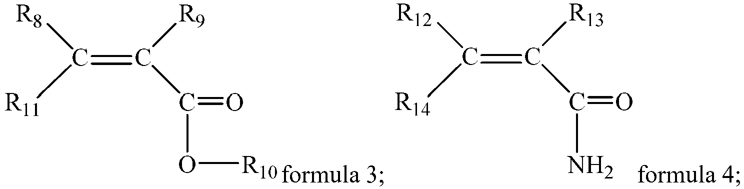 where R₁ includes hydrogen or an alkali metal; and R₂, R₃, R₄, R₅, R₆, R₇, R₈, R₉, R₁₁, R₁₂, R₁₃, and R₁₄ each independently include hydrogen or substituted or unsubstituted C₁-C₆ alkyl; and R₁₀ includes substituted or unsubstituted C₁-C₂₀ alkyl.

In some embodiments, R₁ includes hydrogen; and/or R₂, R₃, R₄, R₅, R₆, R₇, R₈, R₉, R₁₁, R₁₂, R₁₃, and R₁₄ each independently include hydrogen; and/or R₁₀ includes substituted or unsubstituted C₆-C₁₂ alkyl.

In some embodiments, in the binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (2-5):(1-4):(1-4):(0.5-3). This helps to obtain a multifunctional first binder with suitable binding property, thickening property, plasticity, and dispersibility.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 3 is 10%-40%. In this way, the binder has suitable hydrophobicity and flexibility.

In some embodiments, a weight-average molecular weight of the polymer is 200,000-1,500,000. This helps to improve the binding property and structural stability of polymer molecules.

### BRIEF DESCRIPTION OF DRAWINGS

FIG. 1 is a schematic diagram of a battery cell in an embodiment of this disclosure.
FIG. 2 is an exploded view of a battery cell according to the embodiment of this disclosure in FIG. 1.
FIG. 3 is a schematic diagram of a battery module in an embodiment of this disclosure.
FIG. 4 is a schematic diagram of a battery pack in an embodiment of this disclosure.
FIG. 5 is an exploded view of the battery pack according to the embodiment of this disclosure in FIG. 4.
FIG. 6 is a schematic diagram of an electric apparatus using a secondary battery as a power source in an embodiment of this disclosure.

### Description of reference signs:

1. battery pack; 2. upper box body; 3. lower box body; 4. battery module; 5. battery cell; 51. housing; 52. electrode assembly; and 53. top cover assembly.

### DESCRIPTION OF EMBODIMENTS

The following specifically discloses in detail embodiments of the secondary battery, electric apparatus, and binder of this disclosure, with appropriate reference to the accompanying drawings. However, there may be cases where unnecessary detailed descriptions are omitted. For example, detailed descriptions of a well-known matter and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this disclosure and are not intended to limit the subject described in the claims.

"Ranges" disclosed in this disclosure are defined in the form of lower and upper limits and a given range is defined by one lower limit and one upper limit selected, where the selected lower and upper limits define boundaries of that special range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this disclosure, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this disclosure can be combined with each other to form new technical solutions.

Unless otherwise specified, all the technical features and optional technical features of this disclosure can be combined with each other to form new technical solutions.

Unless otherwise specified, all the steps in this disclosure can be performed sequentially or randomly, preferably, performed sequentially. For example, a method including steps (a) and (b) indicates that the method may include steps (a) and (b) performed sequentially, or may include steps (b) and (a) performed sequentially. For example, that the method may further include step (c) indicates that step (c) may be added to the method in any sequence. For example, the method may include steps (a), (b), and (c), or steps (a), (c), and (b), or steps (c), (a), and (b), or the like.

Unless otherwise specified, terms used in this disclosure have common meanings generally understood by persons skilled in the art.

Unless otherwise specified, numerical values of parameters mentioned in this disclosure may be determined by using various test methods commonly used in the art. For example, they may be determined by using the test methods provided in this disclosure.

Negative electrode plates, as an important component of secondary batteries, affect the performance of secondary batteries to a certain extent. Currently, in order to increase energy density of secondary batteries, loading amounts of negative electrode plates are usually increased. Increasing loading amounts of negative electrode plates is typically achieved by reducing amounts of other materials such as binders. However, reducing amounts of binders can lead to a series of processing issues such as poor stability of negative electrode slurries, and easy fall off of negative electrode plates.

In view of this, this disclosure provides a new secondary battery, electric apparatus, and binder. The secondary battery has an improved energy density and does not deteriorate processing performance.

### Secondary battery

A first aspect of this disclosure provides a secondary battery including a positive electrode plate, a negative electrode plate, and a separator. The negative electrode plate includes a negative electrode current collector and a negative electrode film layer disposed on at least one surface of the negative electrode current collector. The negative electrode film layer includes a negative electrode active material and a first binder. A mass percentage of the negative electrode active material in the negative electrode film layer is 96%-98.4%, and a mass percentage of the first binder in the negative electrode film layer is 0.5%-3%. The first binder includes a polymer, and the polymer includes -COOM, -CONH₂, -CN, and -COOR, where M represents an alkali metal, and R represents substituted or unsubstituted C₁-C₂₀ alkyl.

In this disclosure, the -COOM, -CONH₂, -CN, and -COOR groups in the polymer impart a negative charge to the polymer, causing a repulsive force between different chain segments of the polymer. This allows the polymer to stretch in a solution and the chain segments to intertwine with each other, improving a binding force of the first binder, thereby improving viscosity of a negative electrode slurry and improving stability of the slurry. The -COOM group is hydrophilic and therefore beneficial to dispersibility of the negative electrode slurry. -CONH₂ (amide) can regulate a polymerization reaction, leading to a polymer with suitable weight-average molecular weight, viscosity, and solid content, and good stability. -CN (nitrile) is a strong polar group that helps to increase an interactive force between the first binder and other substances, thereby increasing a binding force of the first binder. An alkyl side chain of -COOR (ester) is hydrophobic, forming better affinity with the negative electrode active material, thereby better covering the negative electrode active material and helping to improve the dispersibility of the negative electrode slurry. In addition, the alkyl side chain of -COOR (ester) can increase the flexibility of the negative electrode slurry, and reduce stress shrinkage of the coating layer during coating at high temperature, thereby alleviating phenomena such as coating cracking and tab wrinkling of the negative electrode film layer. Therefore, the first binder in this disclosure has excellent thickening property, binding property, plasticity, and dispersibility. Using the first binder can reduce the total amount of the binder, thereby increasing the mass percentage of the negative electrode active material in the negative electrode film layer without affecting the processing performance of the secondary battery. That is, this improves the energy density of the secondary battery in this disclosure without deteriorating the processing performance.

It should be noted that in this disclosure, due to the large loading amount of the secondary battery, polarization during charge and discharge is reduced, and impedance is decreased, which is beneficial to improving the rate performance and cycling performance of the secondary battery.

In some embodiments, M includes one or more of Li, Na, and K.

As for C₁-C₂₀ alkyl, examples include straight-chained or branched alkyl with 1-20 carbon atoms such as methyl, ethyl, n-propyl, isopropyl, n-butyl, isobutyl, tert-butyl, pentyl, hexyl, 2-methylhexyl, heptyl, 2-methylheptyl, octyl, nonyl, decyl, undecyl, or dodecyl.

In this disclosure, the term "substituted" means that at least one hydrogen atom of the above group is replaced by a substituent. The substituent may be independently selected from hydroxyl, thiol, amino, cyano, nitro, halogen atom (for example, fluorine, chlorine, or bromine), aryl (for example, phenyl or naphthyl), heteroaryl (referring to aryl group where one or more carbon atoms are replaced by oxygen, nitrogen, phosphorus, or sulfur atoms, such as pyridyl, imidazolyl, pyrazolyl, and quinolinyl), alkyl, alkoxy, alkenyl, alkynyl, and the like.

The term "secondary battery" mentioned in this specification refers to a battery cell, battery module, or battery pack.

In some embodiments, the first binder includes a structural unit derived from a monomer represented by formula 1, a structural unit derived from a monomer represented by formula 2, a structural unit derived from a monomer represented by formula 3, and a structural unit derived from a monomer represented by formula 4: 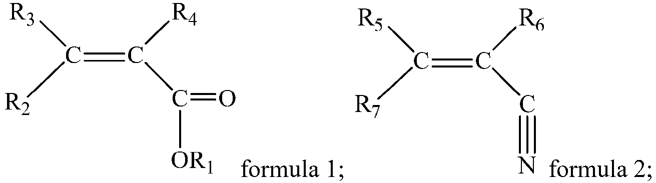 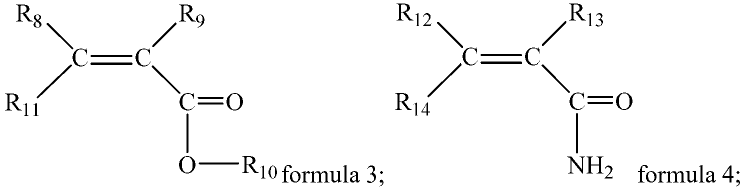 where R₁ includes hydrogen or an alkali metal; and R₂, R₃, R₄, R₅, R₆, R₇, R₈, R₉, R₁₁, R₁₂, R₁₃, and R₁₄ each independently include hydrogen or substituted or unsubstituted C₁-C₆ alkyl; and R₁₀ includes substituted or unsubstituted C₁-C₂₀ alkyl.

In some embodiments, R₁ includes an alkali metal, where the alkali metal includes lithium or sodium.

In some embodiments, R₁ includes hydrogen; and/or R₂, R₃, R₄, R₅, R₆, R₇, R₈, R₉, R₁₁, R₁₂, R₁₃, and R₁₄ each independently include hydrogen; and/or R₁₀ includes C₆-C₁₂ alkyl.

As for C₁-C₆ alkyl, examples include straight-chained or branched alkyl with 1-6 carbon atoms such as methyl, ethyl, n-propyl, isopropyl, n-butyl, isobutyl, tert-butyl, pentyl, or hexyl.

As for C₁-C₂₀ alkyl, examples include straight-chained or branched alkyl with 1-20 carbon atoms such as methyl, ethyl, n-propyl, isopropyl, n-butyl, isobutyl, tert-butyl, pentyl, hexyl, heptyl, octyl, nonyl, decyl, undecyl, or dodecyl.

The term "substituted" herein means that at least one hydrogen atom of the above group is replaced by a substituent. Examples of the substituent are the same as above. Details are not described herein again.

The inventors have found through research that the structural unit (acrylic acid structural unit) of the monomer represented by formula 1 in the first binder is hydrophilic, which is beneficial to improving the dispersibility of the negative electrode slurry. In addition, the structural unit of the monomer represented by formula 1 can further provide a lithium ion transport channel. In the first binder, an increase in the number of these structural units can increase active ion transport channels, improving the transport speed of active ions, thereby improving the charging capacity of the secondary battery. Additionally, with the structural unit (acrylonitrile structural unit) derived from the monomer represented by formula 2 introduced in the first binder, a strong polar group is introduced, improving an interactive force between the binder and other substances, thereby improving a binding force of the polymer. Because an alkyl side chain of an ester group is hydrophobic, the introduced structural unit (acrylate structural unit) derived from the monomer represented by formula 3 forms better affinity with the negative electrode active material, thereby better covering the negative electrode active material, and helping to improve the dispersibility of the negative electrode slurry. In addition, a long side chain group in the structural unit derived from the monomer represented by formula 3 reduces interaction between molecular chain segments of the polymer, making rotation in a single bond easier. This improves the flexibility of the prepared slurry, reducing stress shrinkage of the coating layer during coating, thereby reducing issues such as cracking and tab wrinkling. Introducing the structural unit (acrylamide structural unit) derived from the monomer represented by formula 4 can regulate a polymerization reaction to obtain a polymer with suitable weight-average molecular weight, viscosity, and solid content, and good stability. Therefore, the first binder in this disclosure has excellent thickening property, binding property, plasticity, and dispersibility.

In some embodiments, in the first binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (20%-50%): (10%-40%): (10%-40%): (10%-40%); and optionally, (30%-50%): (10%-30%): (10%-30%): (10%-20%). This helps to obtain a multifunctional first binder with suitable thickening property, binding property, plasticity, and dispersibility.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 3 is 10%-40%. Therefore, the first binder possesses suitable hydrophobicity and flexibility, which is beneficial to improving the dispersibility and flexibility of the negative electrode slurry, thereby improving the processing performance of the secondary battery.

For example, the molar amount of the structural unit derived from the monomer represented by formula 3 may be 10%, 15%, 20%, 25%, 30%, 35%, 40%, or a value in a range defined by any two of the foregoing values. Optionally, the molar amount of the structural unit derived from the monomer represented by formula 3 may be 20%-40%.

In this disclosure, as the monomer represented by formula 3, examples can include (methyl) acrylate and the like. (Methyl) acrylate includes C₁-C₂₀ alkyl ester of (methyl) acrylic acid. C₁-C₂₀ alkyl refers to straight-chained or branched alkyl with 1-20 carbon atoms, such as 1-15 carbon atoms, 1-10 carbon atoms, or 1-5 carbon atoms. For example, the monomer represented by formula 3 can include one or more of methyl (meth)acrylate, ethyl (meth)acrylate, isopropyl (meth)acrylate, n-propyl (meth)acrylate, n-butyl (meth)acrylate, isobutyl (meth)acrylate, tert-butyl (meth)acrylate, pentyl (meth)acrylate, hexyl (meth)acrylate, heptyl (meth)acrylate, n-octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecanyl (meth)acrylate, octadecyl (meth)acrylate, and nonadecanyl (meth)acrylate. Optionally, the monomer represented by formula 3 includes n-octyl acrylate.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 1 is 20%-50%. This helps to obtain a polymer with suitable hydrophilicity and viscosity, and helps to improve the dispersibility and binding property of the negative electrode slurry.

For example, the molar amount of the structural unit derived from the monomer represented by formula 1 may be 20%, 25%, 30%, 35%, 40%, 45%, 50%, or a value in a range defined by any two of the foregoing values. Optionally, the molar amount of the structural unit derived from the monomer represented by formula 1 may be 30%-50%. For the monomer represented by formula 1, examples can include acrylic acid, methacrylic acid, or the like.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 2 is 10%-40%. This helps to obtain a polymer with suitable binding property, and helps to improve the binding property of the negative electrode slurry.

For example, the molar amount of the structural unit derived from the monomer represented by formula 2 may be 10%, 15%, 20%, 25%, 30%, 35%, 40%, or a value in a range defined by any two of the foregoing values. Optionally, the molar amount of the structural unit derived from the monomer represented by formula 2 may be 20%-40%. The monomer represented by formula 2, for example, may be acrylonitrile or the like.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 4 is 5%-30%. This helps to obtain a polymer with suitable weight-average molecular weight, viscosity, and solid content, and good stability, improving the processing performance of the secondary battery.

For example, the molar amount of the structural unit derived from the monomer represented by formula 4 may be 5%, 10%, 15%, 20%, 25%, 30%, or a value in a range defined by any two of the foregoing values. Optionally, the molar amount of the structural unit derived from the monomer represented by formula 4 may be 5%-20%. For the monomer represented by formula 4, examples can include acrylamide or the like.

In some embodiments, a weight-average molecular weight of the polymer is 200,000-1,500,000. Optionally, the weight-average molecular weight of the polymer is 500,000-1,000,000. For example, the weight-average molecular weight of the polymer may be in the range of 200,000, 300,000, 400,000, 500,000, 600,000, 700,000, 800,000, 900,000, 1,000,000, 1,500,000, or a value in a range defined by any two of the foregoing values. The weight-average molecular weight of the polymer falling within the specified range is beneficial to improving the binding property and structural stability of the polymer.

In this disclosure, the weight-average molecular weight has the usual meaning in the field, and is an average molecular weight obtained from a product of the mass of each molecular chain of the polymer and a molar fraction of the molecular chain in the polymer. The weight-average molecular weight can be determined using known methods in the field, for example, by using the gel permeation chromatography test, for example, using a Waters 2695 Isocratic HPLC gel chromatographic instrument (differential refractive index detector 2141). In some embodiments, a test method involves using a polystyrene solution with a mass fraction of 3.0% as a reference sample, and selecting a matched chromatographic column (oily: Styragel HT5DMF7.8*300 mm+Styragel HT4). A purified N-methylpyrrolidone (NMP) solvent is used to prepare a 3.0% polymer solution. The prepared solution is left standing for one day for later use. During test, tetrahydrofuran is first sucked with a syringe for washing. This operation is repeated several times. Then, 5 ml test solution is sucked, with air removed out of the syringe, and the tip is wiped dry. The sample solution is then slowly injected into an injection port. After the reading is stabilized, data is obtained, which indicates the weight-average molecular weight.

In some embodiments, the mass percentage of the negative electrode active material in the negative electrode film layer is 97.0%-97.9%. For example, the mass percentage of the negative electrode active material may be 97.0%, 97.1%, 97.2%, 97.3%, 97.4%, 97.5%, 97.6%, 97.7%, 97.8%, 97.9%, or a value in a range defined by any two of the foregoing values. This ensures that a loading amount of the negative electrode plate is within a suitable range, helping to balance the energy density and processing performance of the secondary battery.

In some embodiments, the mass percentage of the first binder in the negative electrode film layer is 0.5%-2%. For example, the mass percentage of the first binder in the negative electrode film layer may be 0.5%, 0.8%, 1.0%, 1.2%, 1.5%, 1.8%, 2.0%, or a value in a range defined by any two of the foregoing values. This achieves significant binding effects with a small amount of binder, without affecting the processing performance of the secondary battery.

In some embodiments, the negative electrode film layer further includes a second binder; and a total mass percentage of the first binder and the second binder in the negative electrode film layer is 1%-3%, optionally, 1.5%-2.5%. This first ensures that the viscosity of the negative electrode slurry is within a suitable range, and second, allows for a high proportion of the negative electrode active material, helping to balance the processing performance and energy density of the secondary battery. For example, in the negative electrode film layer, the mass ratio of the first binder to the second binder may be 1%, 1.5%, 2%, 2.5%, 3%, or a value in a range defined by any two of the foregoing values.

In some embodiments, the mass percentage of the second binder in the negative electrode film layer is 0.5%-3%. This helps to improve the binding performance of the negative electrode plate. For example, the mass percentage of the second binder in the negative electrode film layer may be 0.5%, 1.0%, 1.5%, 1.8%, 2%, 2.5%, 3%, or a value in a range defined by any two of the foregoing values.

In some embodiments, the second binder includes a styrene-butadiene rubber binder and/or a polyacrylic binder. The styrene-butadiene rubber binder and/or polyacrylic binder has advantages such as high viscosity and good stability, and therefore is beneficial to the processing performance of the secondary battery when used as a binder in the negative electrode film layer. Additionally, the polyacrylic binder has good film-forming properties and therefore well covers an active material, thereby effectively suppressing side reactions. This is beneficial to the cycling performance of the secondary battery.

In some embodiments, the styrene-butadiene rubber binder is a styrene butadiene copolymer.

In some embodiments, the polyacrylic binder includes but is not limited to a copolymer formed by an acrylonitrile monomer, an acrylic acid monomer, and an acrylamide monomer (LA136D from Indel), and neutralized by sodium hydroxide, meaning that the polyacrylic binder used in this disclosure is a sodium-treated binder. The molar ratio of the acrylonitrile monomer, the acrylic acid monomer, and the acrylamide monomer is 4:5:1.

In some embodiments, the mass percentage of the styrene-butadiene rubber binder in the negative electrode film layer is 0.5-3%, optionally, 0.5%-2.5%. This helps to improve the binding performance of the negative electrode plate. For example, the mass percentage of the styrene-butadiene rubber binder in the negative electrode film layer is 0.5%, 1.0%, 1.5%, 2.0%, 2.5%, 3.0%, or a value in a range defined by any two of the foregoing values.

In some embodiments, the mass percentage of the polyacrylic binder in the negative electrode film layer is 0.5-3%, optionally, 0.5-2%. This helps to improve the binding performance of the negative electrode plate. For example, the mass percentage of the polyacrylic binder in the negative electrode film layer may be 0.5%, 1.0%, 1.5%, 2.0%, 2.5%, 3.0%, or a value in a range defined by any two of the foregoing values.

In some embodiments, the negative electrode film layer further includes a dispersant; and a total mass percentage of the first binder and the dispersant in the negative electrode film layer is 0.5%-2%, optionally, 1%-1.5%. This first ensures that the filtration speed of the negative electrode slurry is within a suitable range, and second, allows for a high proportion of the negative electrode active material, helping to balance the processing performance and energy density of the secondary battery. For example, in the negative electrode film layer, the mass ratio of the first binder to the dispersant may be 0.5%, 0.8%, 1%, 1.2%, 1.5%, 1.8%, 2.0%, or a value in a range defined by any two of the foregoing values.

In some embodiments, the mass percentage of the dispersant in the negative electrode film layer is 0-2%, optionally, 0-1.5%. In this way, the dispersant plays a good suspending and dispersing role for particles of the negative electrode active material, the conductive agent, and the like during preparation, ensuring that the negative electrode slurry has a viscosity and filtration speed within a suitable range, and that the negative electrode slurry has high stability. This is beneficial to the processing performance of the secondary battery. For example, the mass percentage of the dispersant in the negative electrode film layer may be 0.1%, 0.2%, 0.5%, 0.8%, 1.0%, 1.5%, 2.0%, or a value in a range defined by any two of the foregoing values.

In some embodiments, the dispersant includes one or more of sodium carboxymethyl cellulose, sodium polystyrene sulfonate, or silane coupling agent.

In some embodiments, in the negative electrode film layer, a total mass percentage of the first binder, the second binder, and the dispersant is 1.5%-2.5%. This balances the processing performance and energy density of the secondary battery. For example, the total mass percentage of the first binder, the second binder, and the dispersant may be 1.5%, 1.8%, 2.0%, 2.2%, 2.5%, or a value in a range defined by any two of the foregoing values.

In some embodiments, the negative electrode film layer further includes a conductive agent; and a mass percentage of the conductive agent in the negative electrode film layer is 0.1%-2%, optionally, 0.1%-1. The mass percentage of the conductive agent falling within the foregoing range helps to improve a loading amount of the negative electrode plate, thereby further improving the energy density of the secondary battery. For example, in the negative electrode film layer, the mass percentage of the conductive agent may be 0.1%, 0.2%, 0.3%, 0.4%, 0.5%, 0.6%, 0.7%, 1%, 1.5%, 2.0%, or a value in a range defined by any two of the foregoing values.

In some embodiments, the conductive agent includes conductive carbon black and/or carbon nanotubes. For example, carbon nanotubes can include single-walled carbon nanotubes or multi-walled carbon nanotubes. Carbon nanotubes have higher conductivity. Therefore, using carbon nanotubes as a conductive agent can further reduce the mass percentage of the conductive agent, thereby increasing the mass percentage of the negative electrode active material in the negative electrode slurry, that is, improving the loading amount of the negative electrode plate. This is more beneficial to improving the energy density of the secondary battery.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include one or more of artificial graphite, natural graphite, soft carbon, hard carbon, silicon-based material, tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this disclosure is not limited to these materials, and may alternatively use other conventional materials that can be used as negative electrode active materials for batteries. One of these negative electrode active materials may be used alone, or two or more of them may be used in combination.

In some embodiments, the negative electrode plate may be prepared in the following manner: the constituents used for preparing the negative electrode plate, for example, the negative electrode active material, the conductive agent, the first binder, the second binder, and the dispersant are dispersed in a solvent (for example, deionized water) to form a negative electrode slurry; and the negative electrode slurry is applied onto the negative electrode current collector, followed by processes such as drying and cold pressing to obtain the negative electrode plate.

### Positive electrode plate

The positive electrode plate includes a positive electrode current collector and a positive electrode film layer disposed on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode material includes one or more of lithium iron phosphate, lithium manganese iron phosphate, and nickel cobalt manganese ternary material.

In some embodiments, when the battery cell is a lithium-ion battery, the positive electrode active material may be a well-known positive electrode active material used for a lithium-ion battery in the art. For example, the positive electrode active material may include at least one of the following materials: olivine-structured lithium-containing phosphate, lithium transition metal oxide, and respective modified compounds thereof. However, this disclosure is not limited to these materials, and may alternatively use other conventional materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCM₈₁₁ for short)), lithium nickel cobalt aluminum oxide (for example, LiNi_{0.85}Co_{0.1}Al_{0.05}O₂), and modified compounds thereof. Examples of the olivine-structured lithium-containing phosphate may include but are not limited to at least one of lithium iron phosphate (for example, LiFePO₄ (LFP for short)), composite material of lithium iron phosphate and carbon, lithium manganese phosphate (for example, LiMnPO₄), composite material of lithium manganese phosphate and carbon, lithium manganese iron phosphate, or composite material of lithium manganese iron phosphate and carbon.

During charge and discharge, the battery will undergo lithium intercalation, deintercalation, and consumption, resulting in different molar amounts of lithium at different discharge states. In the enumeration of the positive electrode active material in this disclosure, the molar amount of Li is the initial state of the material, that is, the state before feeding. When the positive electrode active material is applied to a battery system, the molar amount of Li changes after a charge-discharge cycle.

In some embodiments, when the battery cell is a sodium-ion battery, the positive electrode active material may be a well-known positive electrode active material used for a sodium-ion battery in the art. For example, the positive electrode active material can include at least one of sodium-containing layered oxide, polyanionic sodium-ion compound, and Prussian blue sodium ion compound.

For example, sodium-containing layered oxide may be iron manganese-based layered oxide. Iron manganese-based layered oxide includes at least one of nickel iron manganese-based layered oxide and copper iron manganese-based layered oxide.

As an optional technical approach in this disclosure, the polyanionic sodium-ion compound may be a compound having a sodium ion, a transition metal ion, and a tetrahedral (YO₄)ⁿ⁻ anion unit. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻. The polyanionic sodium-ion compound can alternatively be a compound having a sodium ion, a transition metal ion, a tetrahedral (YO₄)ⁿ⁻ anion unit, and a halogen anion. The transition metal may be at least one of Mn, Fe, Ni, Co, Cr, Cu, Ti, Zn, V, Zr, and Ce; Y may be at least one of P, S, and Si; n represents the valence state of (YO₄)ⁿ⁻; and halogen may be at least one of F, Cl, and Br.

The polyanionic sodium-ion compound may alternatively be a compound having a sodium ion, a tetrahedral (YO₄)ⁿ⁻ anion unit, a polyhedral (ZO_{y})^{m+} unit, and optionally a halogen anion. Y may be at least one of P, S, and Si, n represents the valence state of (YO₄)ⁿ; Z represents a transition metal, which may be at least one of Mn, Fe, Ni, Co, Cr, Cu, Ti, Zn, V, Zr, and Ce, m represents the valence state of (ZO_{y})^{m+}; and halogen may be at least one of F, Cl, and Br. The polyanionic compound is, for example, at least one of NaFePO₄, Na₃V₂(PO₄)₃, NaM'PO₄F (M' is one or more of V, Fe, Mn, and Ni), and Na₃(VO_{y})₂(PO₄)₂F_{3-2y} (0≤y≤1).

As an optional technical approach in this disclosure, the polyanionic sodium-ion compound may be Naₓ₋ₐAₐV_{y-b}M_{b}(PO₄)_{2-2c}(DO₄)_{2c}F_{z-d}Q_{d}, where element A represents an alkali metal element doped with a substituent element Na, element M represents a metal element for substituting element V, element D represents a doping element for substituting element P, element Q represents a doping element for substituting element F, element D includes at least one of Si and S, and element Q includes at least one of Cl and O; where 3.5≤x≤4.5, 0≤a≤0.15x, 0.8≤y≤1.1, 0≤b≤0.3y, 0≤c≤0.15, 0.8≤z≤1.1, and 0≤d≤0.2z. Optionally, element A can include at least one of K and Li; and element M can include at least one of Fe, Cr, Al, Sc, Ga, In, Ti, Zr, Mn, Zn, Ni, Cu, and Co.

As an optional technical approach in this disclosure, the polyanionic sodium-ion compound can be NaₓR_{y}(PO₄)₂P₂O₇, where x=3.5-4.5, y=2.75-3.25, and R includes at least one of Mg, Al, Sc, Ti, V, Cr, Mn, Fe, Co, Ni, Cu, Zn, Zr, Cr, Nb, Mo, In, Ga, Sn, Hf, Ta, W, and Pb.

As an optional technical approach in this disclosure, the polyanionic sodium-ion compound can be Na₄₊ₓR_{3-y}P₄₋ₘO₁₅/C; where 0<x<0.5, 0<y≤0.5, 0<m≤0.2, and R includes at least one of Mg, Al, Sc, Ti, V, Cr, Mn, Fe, Co, Ni, Cu, Zn, Zr, Cr, Nb, Mo, In, Ga, Sn, Hf, Ta, W, and Pb.

The Prussian blue compound may be a compound having a sodium ion, a transition metal ion, and a cyanide ion (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0<a≤2, 0<b<1, and 0<c<1.

In the enumeration of positive electrode active materials in this disclosure, the molar amount of oxygen O is only in the theoretical state value. Lattice oxygen release causes fluctuations in the molar amount of oxygen, resulting in actual fluctuations in the molar amount of O.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### Electrolyte

In some embodiments, the secondary battery cell further includes an electrolyte. In a charge and discharge process of the battery, active ions are intercalated and deintercalated between the positive electrode plate and the negative electrode plate. The electrolyte conducts ions between the positive electrode plate and the negative electrode plate. The electrolyte is not specifically limited to any particular type in this disclosure, and may be selected based on needs. For example, the electrolyte may be in a liquid state, a gel state, or an all-solid state.

In some embodiments, the electrolyte is a liquid electrolyte. The electrolyte includes an electrolytic salt and a solvent.

In some embodiments, the electrolytic salt may be at least one selected from sodium hexafluorophosphate, sodium tetrafluoroborate, sodium perchlorate, sodium hexafluoroborate, sodium bis(fluorosulfonyl)imide, sodium bis-trifluoromethanesulfonimide, sodium trifluoromethanesulfonat, sodium difluorophosphate, sodium difluorooxalatoborate, sodium bisoxalatoborate, sodium difluorobisoxalate phosphate, and sodium tetrafluoro oxalate phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### Separator

In some embodiments, the battery cell further includes a separator. The separator is disposed between the positive electrode plate and the negative electrode plate to mainly prevent a short circuit between positive and negative electrodes and to allow the ions to pass through. The separator is not limited to any particular type in this disclosure, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the battery cell may include an outer package. The outer package is used for packaging the electrode assembly and the electrolyte.

In some embodiments, the outer package of the battery cell may be a hard shell, for example, a hard plastic shell, an aluminum shell, or a steel shell. The outer package of the battery cell may alternatively be a soft package, for example, a soft bag. A material of the soft pack may be plastic. As the plastic, polypropylene, polybutylene terephthalate, polybutylene succinate, and the like may be listed.

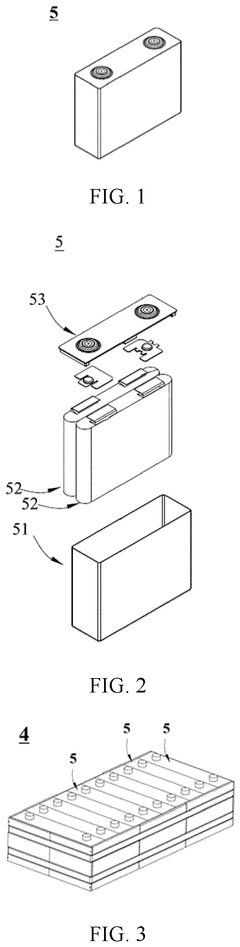

This disclosure does not impose any special limitations on the shape of the battery cell, and the battery cell may be cylindrical, rectangular, or of any other shapes. For example, FIG. 1 shows a prismatic battery cell 5 as an example.

In some embodiments, referring to FIG. 2, the outer package may include a housing 51 and a top cover assembly 53. The housing 51 may include a base plate and side plates connected onto the base plate, and the base plate and the side plates enclose an accommodating cavity. The housing 51 has an opening communicating with the accommodating cavity, and the top cover assembly 53 can cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. There may be one or more electrode assemblies 52 in the battery cell 5, and persons skilled in the art may make choices according to actual requirements.

In some embodiments, the battery cell may be used to assemble a battery module, and the battery module may include one or more battery cells. The specific quantity may be chosen by persons skilled in the art based on use and capacity of the battery module.

FIG. 3 shows a battery module 4 as an example. Referring to FIG. 3, in the battery module 4, a plurality of battery cells 5 may be sequentially arranged in a length direction of the battery module 4. Certainly, the batteries may alternatively be arranged in any other manners. Further, the plurality of battery cells 5 may be fastened by using fasteners.

Optionally, the battery module 4 may further include a shell with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

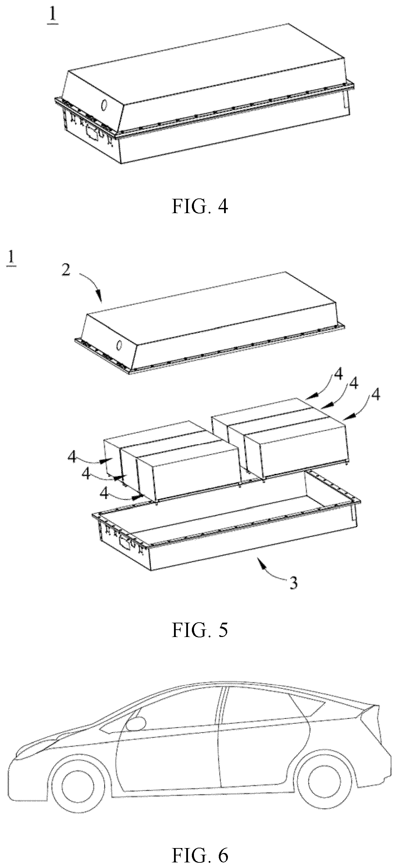

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

### Electric apparatus

A second aspect of this disclosure provides an electric apparatus. The electric apparatus includes the secondary battery according to the first aspect of this disclosure. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

A battery cell, a battery module, or a battery pack may be selected for the electric apparatus according to requirements for using the apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually needs to be light and thin, and the battery cell may be used as a power source.

### Binder

A third aspect of this disclosure provides a binder, including a polymer, where the polymer includes -COOM, -CONH₂, -CN, and -COOR, where M includes an alkali metal, and R includes C₁-C₂₀ alkyl.

In this disclosure, the binder including -COOM, -CONH₂, -CN, and -COOR imparts a negative charge to the polymer, causing a repulsive force between different chain segments of the polymer. This allows the polymer to stretch in a solution and the chain segments to intertwine with each other, improving the binding force and thickening effect of the binder. -COOM is hydrophilic and therefore beneficial to improving dispersibility of a dispersing system. -CONH₂ (amide) can regulate a polymerization reaction, leading to a polymer with suitable weight-average molecular weight, viscosity, and solid content, and good stability. -CN (nitrile) is a strong polar group that helps to increase an interactive force between the polymer and other substances, thereby increasing a binding force of the binder. Hydrophobic -COOR is beneficial to improving dispersibility of a dispersing system. Additionally, R in -COOR includes substituted or unsubstituted C₁-C₂₀ alkyl, providing the polymer with a long alkyl side chain, thereby improving the flexibility of the binder. Therefore, the binder in this disclosure has excellent binding property, thickening property, plasticity, and dispersibility.

In some embodiments, M includes one or more of Li, Na, and K. Thus, when the binder is applied to a battery system corresponding to a metal element, rate performance of a secondary battery can be improved.

In some embodiments, the first binder includes a structural unit derived from a monomer represented by formula 1, a structural unit derived from a monomer represented by formula 2, a structural unit derived from a monomer represented by formula 3, and a structural unit derived from a monomer represented by formula 4: 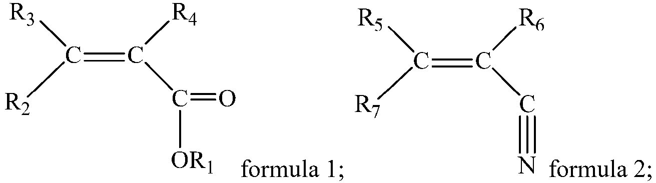 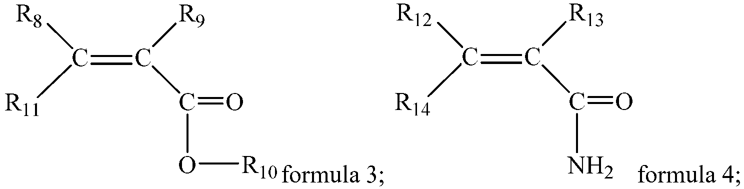 where R₁ includes hydrogen or an alkali metal; and R₂, R₃, R₄, R₅, R₆, R₇, R₈, R₉, R₁₁, R₁₂, R₁₃, and R₁₄ each independently include hydrogen or substituted or unsubstituted C₁-C₆ alkyl; and R₁₀ includes substituted or unsubstituted C₁-C₂₀ alkyl.

In some embodiments, R₁ includes hydrogen; and/or R₂, R₃, R₄, R₅, R₆, R₇, R₈, R₉, R₁₁, R₁₂, R₁₃, and R₁₄ each independently include hydrogen; and/or R₁₀ includes C₆-C₁₂ alkyl.

In some embodiments, in the binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (2-5):(1-4):(1-4):(0.5-3), optionally, (3-5):(3-4):(2-4):(0.5-2). This helps to obtain a multifunctional first binder with suitable binding property, thickening property, plasticity, and dispersibility.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 3 is 10%-40%, optionally, 20%-40%. In this way, the first binder has suitable hydrophobicity and flexibility.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 1 is 20%-50%, optionally, 30%-50%. This helps to obtain a polymer with suitable hydrophilicity and binding property.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 2 is 10%-40%, optionally, 20%-40%. This helps to obtain a polymer with suitable binding property.

In some embodiments, based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 4 is 5%-30%, optionally, 5%-20%. This helps to obtain a polymer with suitable weight-average molecular weight, viscosity, and solid content, and good stability.

In some embodiments, a weight-average molecular weight of the polymer is 200,000-1,500,000, optionally, 500,000-1,000,000. This helps to improve the binding property and structural stability of polymer molecules.

In some embodiments, the binder can be prepared in the following way:
S1: adding an initiator to a water solution of the monomer represented by formula 1, the monomer represented by formula 2, the monomer represented by formula 3, and the monomer represented by formula 4 for mixing to uniformity to obtain a mixed solution, and S2: making the mixed solution undergo a polymerization reaction to obtain a binder: 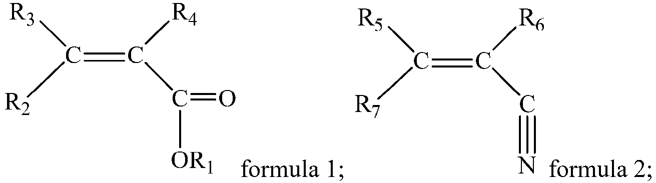 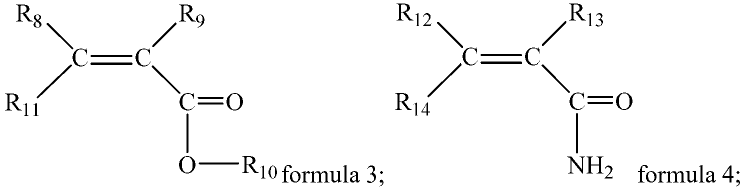
where R₁ includes hydrogen or an alkali metal; and R₂, R₃, R₄, R₅, R₆, R₇, R₈, R₉, R₁₁, R₁₂, R₁₃, and R₁₄ each independently include hydrogen or substituted or unsubstituted C₁-C₆ alkyl; and R₁₀ includes substituted or unsubstituted C₁-C₂₀ alkyl.

In some embodiments, R₁ includes hydrogen; and/or R₂, R₃, R₄, R₅, R₆, R₇, R₈, R₉, R₁₁, R₁₂, R₁₃, and R₁₄ each independently include hydrogen; and/or R₁₀ includes substituted or unsubstituted C₆-C₁₂ alkyl.

In this disclosure, using an initiator to initiate polymerization of a solution containing the monomer represented by formula 1, monomer represented by formula 2, monomer represented by formula 3, and monomer represented by formula 4 prepare a binder with excellent binding property, dispersibility, thickening property, and plasticity.

In some embodiments, in step S2, the polymerization reaction is carried out at 50°C-80°C with stirring at 300 rpm/min-1500 rpm/min for 4 h-12 h. Optionally, the polymerization reaction is conducted at 60°C-70°C with stirring at 500 rpm/min-1000 rpm/min for 6 h-10 h. Conducting the polymerization reaction under these conditions helps to improve the reaction rate and monomer conversion.

In some embodiments, in step S1, the molar ratio of the monomer represented by formula 1, monomer represented by formula 2, monomer represented by formula 3, and monomer represented by formula 4 is (2-5):(1-4):(1-4):(0.5-3), optionally (3-5):(2-4):(2-4):(0.5-2). Maintaining the mass ratio of the monomers within the specified range helps to obtain a binder with the best comprehensive properties.

In some embodiments, in step S1, the solid content of the mixed solution is 4%-10%; optionally, the solid content of the mixed solution is 5%-8%. The solid content of the mixed solution within the specified range helps to obtain a binder with suitable viscosity, excellent processing performance, and suitable for mass production automation.

In some embodiments, in step S1, the amount of initiator is 0.05%-0.1% of the total molar mass of the monomer represented by formula 1, monomer represented by formula 2, monomer represented by formula 3, and monomer represented by formula 4, optionally, 0.05%-0.07%. The amount of initiator within the specified range helps to form a polymer with a suitable weight-average molecular weight.

In some embodiments, in step S1, the initiator includes azo initiator, organic peroxide initiator, inorganic peroxide, or persulfate. Optionally, the initiator is persulfate, and more optionally, the initiator is ammonium persulfate. Using the above initiators features a fast initiation rate and low reaction temperature, and a resulting binder has moderate weight-average molecular weight and good stability.

### Examples

The following describes examples of this disclosure. The examples described below are illustrative and only used for explaining this disclosure, and cannot be construed as limitations on this disclosure. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Example 1

### Preparation of first binder

S1. 0.4 mol acrylic acid, 0.3 mol acrylonitrile, 0.2 mol n-octyl acrylate, and 0.1 mol acrylamide were added to a reactor, with 1000 ml deionized water added. Then, an initiator ammonium persulfate was added to obtain a mixed solution with a solid content of 6%. The initiator accounted for 0.05% of the total mass of the monomers.

S2. The mixed solution obtained in step S1 was stirred at a rotation speed of 500 rpm/min for 0.5 h, followed by an 8-h reaction at a constant temperature of 80°C to obtain a polymer. Then, deionized water was added to the obtained polymer to allow a polymer solution to have a solid content of 5%. Lithium hydroxide was used for neutralization to adjust the pH value of the polymer solution to 8, so as to obtain a first binder.

The weight-average molecular weight of the first binder was tested using a Waters 2695 Isocratic HPLC gel chromatographic instrument. Specifically, a polystyrene solution with a mass fraction of 3.0% was used as a reference sample. A matched chromatographic column (oily: Styragel HT5DMF7.8*300 mm+Styragel HT4) was selected. A purified N-methylpyrrolidone (NMP) solvent was used to prepare a 3.0% polymer solution. The prepared solution was left standing for one day for later use. During test, tetrahydrofuran was first sucked with a syringe for washing. This operation was repeated several times. Then, 5 ml test solution was sucked, with air removed out of the syringe, and the tip was wiped dry. The sample solution was then slowly injected into an injection port. After the reading was stabilized, data was obtained, which indicated a weight-average molecular weight of 800,000 of the first binder.

### Preparation of negative electrode plate

A negative electrode active material graphite, a conductive agent Super P, and the first binder were dissolved in deionized water in a mass ratio of 97.5:1:1.5. The foregoing substances were mixed to uniformity to prepare a negative electrode slurry. The negative electrode slurry was applied once on a negative electrode current collector copper foil, followed by drying, cold-pressing, and cutting to obtain a negative electrode plate.

### Preparation of positive electrode plate

A positive electrode active material lithium iron phosphate, a conductive agent Super P, and a binder PVDF were mixed in a mass ratio of 97:2:1, with a solvent N-methylpyrrolidone solvent added. The foregoing substances were stirred uniformly to form a positive electrode slurry. The positive electrode slurry was applied on a positive electrode current collector aluminum foil, followed by drying, cold-pressing, and cutting to obtain a positive electrode plate.

### Electrolyte

Ethylene carbonate (EC), diethyl carbonate (DEC), and propylene carbonate (PC) were mixed in equal volumes to obtain an organic solvent, and then LiPF₆ was dissolved in the organic solvent to prepare an electrolyte with a concentration of 1 mol/L.

### Separator

A porous polyethylene film was used as a separator.

### Preparation of secondary battery

The positive electrode plate, the separator, and the negative electrode plate were stacked in sequence, so that the separator was placed between the positive electrode plate and the negative electrode plate for isolation, and the stack was laminated to obtain a jelly roll. The jelly roll was placed in an outer package, and the prepared electrolyte was injected, followed by sealing to obtain a secondary battery.

### Test for electric performance of secondary battery

### 1) Cycling performance

The cycling performance of the secondary battery was indicated by the number of cycles corresponding to 80% SOH at 25°C. The test steps were as follows:
(1) Charged at a constant current of 1/3C to 3.65 V, and then charged at a constant voltage of 3.65 V to a current of 0.05C;
(2) Left standing for 5 min;
(3) Discharged at a constant current of 1/3C to 2.0 V, with the discharge capacity after the first cycle recorded as D1;
(4) Left standing for 5 min;
(5) Steps (1) to (4) were repeated for n times, with the discharge capacity recorded as Dn; and
(6) When Dn = D1*80%, the number of cycles n was recorded, where n was the number of cycles corresponding to 80% SOH.

### 2) Rate performance

The rate performance of the secondary battery was indicated by an equivalent charge window test corresponding to 10%SOC - 80%SOC at 25°C. The test method was as follows:
The secondary battery was charged at a constant current of 1/3C to a charge cut-off voltage of 3.65 V, then charged at a constant voltage of 3.65 V to a current of 0.05C, left standing for 5 min, and then discharged at a constant current of 1/3C to a discharge cut-off voltage of 2 V, with the discharge capacity recorded as C0. Then, the secondary battery was charged successively at a constant current of 0.5C0, 1C0, 1.5C0, 2C0, 2.5C0, 3C0, 3.5C0, 4C0, or 4.5C0 to a full cell discharge cut-off voltage of 3.65 V or a negative electrode cut-off potential of 0 V (whichever was reached first). After each charge, the battery was discharged at 1C₀ to a full cell discharge cut-off voltage of 2 V. Corresponding negative electrode potentials when the battery was charged at different charge rates to 10%SOC, 20%SOC, 30%SOC, 40%SOC, 50%SOC, 60%SOC, 70%SOC, and 80%SOC were recorded respectively. A rate-negative electrode potential curve at different SOC states was plotted, and after linear fitting, a charging rate corresponding to a negative electrode potential of 0 V at each SOC state was obtained. This charging rate represented the charging window at the corresponding SOC state, denoted as C10%SOC, C20%SOC, C30%SOC, C40%SOC, C50%SOC, C60%SOC, C70%SOC, and C80%SOC. The 10%SOC - 80%SOC equivalent charge window is an average value of the charge windows for 10%SOC, 20%SOC, 30%SOC, 40%SOC, 50%SOC, 60%SOC, 70%SOC, and 80%SOC.

A larger equivalent charge window value means that for a battery, it is more difficult for the anode to reach a 0 V lithium precipitation potential when the battery is charged and discharged at a larger rate at 25°C and 10%SOC-80%SOC, that is, the rate performance is higher.

### Test for processing performance of secondary battery

After the negative electrode slurry was prepared, a portion of the negative electrode slurry was taken to test the solid content, viscosity, and filtration speed. The slurry was left standing for 48 hours and then visually inspected for sedimentation of the negative electrode slurry. The test results were recorded in Table 2.
(1) The solid content of the negative electrode slurry was tested in the following manner: The negative electrode slurry was placed in an aluminum-plastic box with a mass of M₀. The total weight was weighed as M₁. The slurry was dried in an oven to remove moisture, and the remaining mass was weighed as M₂. The solid content of the negative electrode slurry was calculated as (M₂-M₀)/(M₁-M₀).
(2) The viscosity of the negative electrode slurry was tested in the following manner: A DV-2TLV Brookfield viscometer was used and a 63r/64r rotor was selected for a viscosity test at an SUV speed of 12 r/min at 25±1°C. The viscosity value at the 6th min was recorded as the viscosity of the negative electrode slurry.
(3) The filtration speed of the negative electrode slurry was tested in the following manner: 500 mL negative electrode slurry was filtered through a 150-mesh filter to obtain 300 mL slurry, and the time taken was recorded.
(4) Electrode plate appearance: After the negative electrode plate was prepared, the negative electrode plate was visually inspected for cracking, and the binding force of the negative electrode plate was tested.

The binding force of the negative electrode plate was tested in the following manner: The cold-pressed negative electrode plate was taken and used as an electrode plate to be tested at 25°C. A sample with a width of 30 mm and a length of 160 mm was cut with a blade. A special double-sided adhesive tape was pasted on a steel plate, where the tape had a width of 20 mm and a length of 150 mm. The cut-off electrode plate sample was pasted on the double-sided adhesive tape, with the test surface facing downwards. Then, the sample was rolled by rollers in a same direction for three times. A paper tape with an equal width as the electrode plate and a length greater than the 100-mm length of the sample was inserted under the electrode plate, and fixed with masking tape. A power source of a tensile machine was turned on to lighten an indicator light. A restraint block was adjusted to an appropriate position. An end of the steel plate not pasted with the electrode plate was fixed using a lower jig, and the paper tape was folded upwards and then fixed using an upper jig. The position of the upper jig was adjusted with the "up" and "down" buttons on a manual controller of the tensile machine. A dedicated computer linked with the tensile machine was opened, and a desktop software icon was double-clicked to start test, with a stretching speed of 50 m/min and a test distance of 50 mm. The software took a binding force data point every 10s, with values of these data points as vertical coordinates, and corresponding test distances as horizontal coordinates. The vertical coordinate reading gradually became stable, and a reading after the vertical coordinate became stable was a binding force.

### Example 2

Similar to Example 1 in the method of preparing the negative electrode plate and assembly of the secondary battery, except that in the preparation of the negative electrode plate, the negative electrode active material graphite, the conductive agent Super P, the first binder, and the styrene-butadiene rubber binder SBR were dissolved in deionized water in a mass ratio of 97:1:1.5:0.5. The foregoing substances were mixed to uniformity to prepare a negative electrode slurry; and the negative electrode slurry was uniformly applied once on a negative electrode current collector copper foil, followed by drying, cold-pressing, and cutting to obtain a negative electrode plate.

### Example 3

Similar to Example 1 in the method of preparing the negative electrode plate and assembly of the secondary battery, except that in the preparation of the negative electrode plate, the negative electrode active material graphite, the conductive agent Super P, the first binder, and the polyacrylic binder LA136D were dissolved in deionized water in a mass ratio of 97:1:1.5:0.5. The foregoing substances were mixed to uniformity to prepare a negative electrode slurry; and the negative electrode slurry was uniformly applied once on a negative electrode current collector copper foil, followed by drying, cold-pressing, and cutting to obtain a negative electrode plate.

### Example 4

Similar to Example 1 in the method of preparing the negative electrode plate and assembly of the secondary battery, except that in the preparation of the negative electrode plate, the negative electrode active material graphite, the conductive agent Super P, the first binder, the styrene-butadiene rubber binder SBR, the polyacrylic binder LA136D, and the dispersant CMC were dissolved in deionized water in a mass ratio of 96:1:0.5:1.5:0.5:0.5. The foregoing substances were mixed to uniformity to prepare a negative electrode slurry; and the negative electrode slurry was uniformly applied once on a negative electrode current collector copper foil, followed by drying, cold-pressing, and cutting to obtain a negative electrode plate.

### Examples 5-7

Similar to Example 1 in the method of preparing the negative electrode plate and assembly of the secondary battery, except that in the preparation of the negative electrode plate, the types and mass percentages of the negative electrode active material, conductive agent, first binder, styrene-butadiene rubber binder SBR, polyacrylic binder LA136D, and dispersant CMC in the negative electrode slurry were adjusted according to Table 2.

### Example 8

Similar to Example 1 in the method of preparing the negative electrode plate and assembly of the secondary battery, except that in the preparation of the first binder, step S1 includes: 0.4 mol methacrylic acid, 0.3 mol acrylonitrile, 0.2 mol dodecyl acrylate, and 0.1 mol acrylamide were added to a reactor, with 1000 ml deionized water added. Then, an initiator ammonium persulfate was added to obtain a mixed solution with a solid content of 6%. The initiator accounted for 0.05% of the total mass of the monomers. All other steps were the same as those in Example 1.

### Examples 9-13

Similar to Example 1 in the method of preparing the negative electrode plate and assembly of the secondary battery, except that in the preparation of the negative electrode plate, the first binder used (refer to Table 1 below) was adjusted according to Table 2.

### Comparative Example 1

Similar to Example 1 in the method of preparing the negative electrode plate and assembly of the secondary battery, except that in the preparation of the negative electrode slurry, no first binder was added.

### Comparative Example 2

Similar to Example 1 in the method of preparing the negative electrode plate and assembly of the secondary battery, except that in the preparation of the negative electrode plate, the first binder used was a copolymer of acrylonitrile, acrylic acid, and acrylamide (LA136D from Indel), and sodium hydroxide was used for neutralization, where a molar ratio of a structural unit of a sodium acrylate monomer, a structural unit of an acrylonitrile monomer, and a structural unit of an acrylamide monomer in the polymer was 4:5:1.

Table 1 shows the first binders used in this disclosure.

**Table 1**

| No. | First binder | | | | | |
|---|---|---|---|---|---|---|
| | Formula 1 | Formula 2 | Formula 3 | Formula 4 | Molar ratio of structural unit derived from formula 1, structural unit derived from formula 2, structural unit derived from formula 3, and structural unit derived from formula 4 | Weight-average molecular weight (ten thousands) |
| 1-1 | Acrylic acid | Acrylonitrile | n-octyl acrylate | Acrylamide | 4:3:2:1 | 80 |
| 1-2 | Methacrylic acid | Acrylonitrile | Dodecyl acrylate | Acrylamide | 4:3:2:1 | 82 |
| 1-3 | Acrylic acid | Acrylonitrile | n-octyl acrylate | Acrylamide | 3:3:3:1 | 86 |
| 1-4 | Acrylic acid | Acrylonitrile | n-octyl acrylate | Acrylamide | 5:2:2.5:0.5 | 85 |
| 1-5 | Acrylic acid | Acrylonitrile | n-octyl acrylate | Acrylamide | 3:2:4:1 | 88 |
| 1-6 | Acrylic acid | Acrylonitrile | n-octyl acrylate | Acrylamide | 4:1:3:2 | 86 |
| 1-7 | Acrylic acid | Acrylonitrile | n-octyl acrylate | Acrylamide | 2:4:1:3 | 79 |
| 2-1 | Acrylic acid | Acrylonitrile | / | Acrylamide | 4:5:1 | 72 |

In Table 1 above, when the first binders 1-1 to 1-7 are prepared, lithium hydroxide is used for neutralization to adjust the pH value of the polymer solution to 8. When the first binder 2-1 is prepared, sodium hydroxide is used for neutralization to adjust the pH value of the polymer solution to 8.

Table 2 shows the formula of the first binder, conductive agent, and negative electrode slurry in Examples 1-13 and Comparative Examples 1-2, and Table 3 shows the performance test results of Examples 1-13 and Comparative Examples 1-2.

**Table 2**

| No. | First binder | Conductive agent | Mass percentages of materials in negative electrode slurry | | | | | |
|---|---|---|---|---|---|---|---|---|
| | | | Negative electrode active material (%) | Conductive agent (%) | First binder (%) | Second binder | | Dispersant (%) |
| | | | | | | Styrene-butadiene rubber binder (%) | Polyacrylic binder (%) | |
| Example 1 | 1-1 | Super P | 97.5 | 1.0 | 1.5 | 0 | 0 | 0 |
| Example 2 | 1-1 | Super P | 97.0 | 1.0 | 1.5 | 0.5 | 0 | 0 |
| Example 3 | 1-1 | Super P | 97.0 | 1.0 | 1.5 | 0 | 0.5 | 0 |
| Example 4 | 1-1 | Super P | 96.0 | 1.0 | 0.5 | 1.5 | 0.5 | 0.5 |
| Example 5 | 1-1 | Single-walled carbon nanotube | 98.4 | 0.1 | 1.5 | 0 | 0 | 0 |
| Example 6 | 1-1 | Single-walled carbon nanotube | 97.9 | 0.1 | 1.5 | 0.5 | 0 | 0 |
| Example 7 | 1-1 | Multi-walled carbon nanotube | 96.0 | 0.5 | 0.5 | 2.0 | 0 | 1.0 |
| Example 8 | 1-2 | Super P | 97.0 | 1.0 | 1.5 | 0.5 | 0 | 0 |
| Example 9 | 1-3 | Super P | 97.0 | 1.0 | 1.5 | 0.5 | 0 | 0 |
| Example 10 | 1-4 | Super P | 97.0 | 1.0 | 1.5 | 0.5 | 0 | 0 |
| Example 11 | 1-5 | Super P | 97.0 | 1.0 | 1.5 | 0.5 | 0 | 0 |
| Example 12 | 1-6 | Super P | 97.0 | 1.0 | 1.5 | 0.5 | 0 | 0 |
| Example 13 | 1-7 | Super P | 97.0 | 1.0 | 1.5 | 0.5 | 0 | 0 |
| Comparative Example 1 | 1-1 | Super P | 95.5 | 1.0 | 0 | 2.0 | 0 | 1.5 |
| Comparative Example 2 | 2-1 | Super P | 97.0 | 1.0 | 1.5 | 0.5 | 0 | 0 |

**Table 3**

| No. | Negative electrode slurry | | | | Negative electrode plate | | Electric performance of secondary battery | |
|---|---|---|---|---|---|---|---|---|
| | Solid content (%) | Viscosity (mPa·s) | Filtration speed (s) | Settled or not after left standing for 48 hours? | Cracked or not? | Binding force (N/m) | Number of cycles corresponding to 80% SOH | Equivalent charge window corresponding to 10%SOC-80%SOC (C) |
| Example 1 | 50.47 | 4674 | 22 | No | No | 14.62 | 3794 | 3.22 |
| Example 2 | 48.94 | 4379 | 23 | No | No | 18.26 | 3847 | 2.71 |
| Example 3 | 48.41 | 4671 | 21 | No | No | 19.18 | 3847 | 2.56 |
| Example 4 | 51.43 | 5164 | 20 | No | No | 20.14 | 3832 | 2.63 |
| Example 5 | 49.68 | 4731 | 29 | No | No | 16.17 | 3834 | 3.64 |
| Example 6 | 49.37 | 4575 | 29 | No | No | 15.73 | 3861 | 3.27 |
| Example 7 | 49.12 | 4394 | 26 | No | No | 23.45 | 3692 | 2.52 |
| Example 8 | 49.06 | 4427 | 24 | No | No | 19.76 | 3839 | 2.34 |
| Example 9 | 48.78 | 4684 | 28 | No | No | 17.38 | 3842 | 2.64 |
| Example 10 | 49.25 | 4678 | 23 | No | No | 16.03 | 3837 | 2.85 |
| Example 11 | 50.12 | 4724 | 31 | No | No | 15.24 | 3824 | 2.62 |
| Example 12 | 49.46 | 4592 | 25 | No | No | 14.86 | 3834 | 2.79 |
| Example 13 | 48.21 | 5032 | 30 | No | No | 20.01 | 3816 | 2.61 |
| Comparative Example 1 | 48.03 | 4126 | 46 | No | Yes | 17.35 | 3643 | 2.59 |
| Comparative Example 2 | 44.77 | 4764 | 130 | No | Yes | 14.08 | 3789 | 2.22 |

From Tables 2 and 3, it can be seen that compared with Comparative Example 1 (where the mass percentage of the negative electrode active material is less than 96%), Examples 1-13 exhibit a higher loading amount and energy density in the negative electrode plates. Additionally, as compared with Comparative Example 1, in Examples 1-13 the negative electrode slurries have a higher solid content, larger viscosity, and higher filtration speed, and the negative electrode plates do not crack after coating, indicating good processing performance. Therefore, the secondary batteries in Examples 1-13 have improved energy density without deteriorating the processing performance. Additionally, Comparative Example 1 has worse cycling performance than Examples 1-13. This is because styrene-butadiene rubber is used as the binder in Comparative Example 1, which has poor film-forming and inadequately covers the active material, leading to insufficient suppression of side reactions.

Although Comparative Example 2 (where LA136D from Indel is used as the binder) increases the energy density, it shows a lower solid content and smaller filtration speed of the negative electrode slurry, a cracked negative electrode plate after coating, and a smaller binding force. Therefore, the negative electrode plate in Comparative Example 2 has poorer processing performance. Additionally, the binder used in Comparative Example 2 is a sodium-treated binder, which exhibits poorer rate performance as compared with Examples 1-13. Moreover, the sodium-treated binder lacks hydrophilic and hydrophobic properties, and therefore results in poorer dispersibility of the negative electrode slurry.

It should be noted that this disclosure is not limited to the foregoing embodiments. The foregoing embodiments are merely examples, and embodiments having substantially the same constructions and having the same effects as the technical idea within the scope of the technical solutions of this disclosure are all included in the technical scope of this disclosure. In addition, without departing from the essence of this disclosure, various modifications made to the embodiments that can be conceived by those skilled in the art, and other manners constructed by combining some of the constituent elements in the embodiments are also included in the scope of this disclosure.

## Claims

1. A secondary battery, comprising a positive electrode plate, a negative electrode plate, and a separator, wherein the negative electrode plate comprises a negative electrode current collector and a negative electrode film layer disposed on at least one surface of the negative electrode current collector; wherein
the negative electrode film layer comprises a negative electrode active material and a first binder, wherein a mass percentage of the negative electrode active material in the negative electrode film layer is 96%-98.4%, and a mass percentage of the first binder in the negative electrode film layer is 0.5%-3%; wherein
the first binder comprises a polymer, the polymer comprises -COOM, -CONH₂, - CN, and -COOR, wherein M comprises an alkali metal, and R comprises substituted or unsubstituted C₁-C₂₀ alkyl.

2. The secondary battery according to claim 1, wherein M comprises one or more of Li, Na, and K.

3. The secondary battery according to claim 1 or 2, wherein the first binder comprises a structural unit derived from a monomer represented by formula 1, a structural unit derived from a monomer represented by formula 2, a structural unit derived from a monomer represented by formula 3, and a structural unit derived from a monomer represented by formula 4: 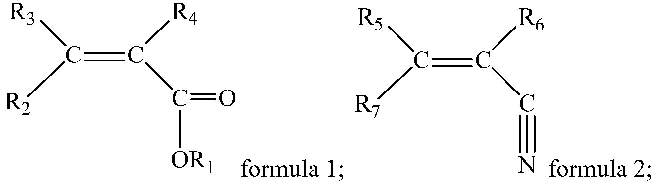 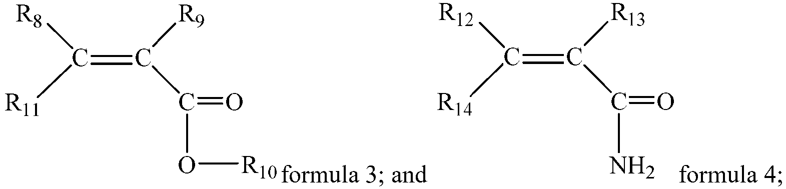
wherein R₁ comprises hydrogen or an alkali metal; and
R₂, R₃, R₄, R₅, R₆, R₇, R₈, R₉, R₁₁, R₁₂, R₁₃, and R₁₄ each independently comprise hydrogen or substituted or unsubstituted C₁-C₆ alkyl; and R₁₀ comprises substituted or unsubstituted C₁-C₂₀ alkyl.

4. The secondary battery according to claim 3, wherein R₁ comprises hydrogen; and/or
R₂, R₃, R₄, R₅, R₆, R₇, R₈, R₉, R₁₁, R₁₂, R₁₃, and R₁₄ each independently comprise hydrogen; and/or R₁₀ comprises substituted or unsubstituted C₆ - C₁₂ alkyl.

5. The secondary battery according to claim 3 or 4, wherein in the first binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (2-5):(1-4):(1-4):(0.5-3).

6. The secondary battery according to any one of claims 3 to 5, wherein in the first binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (3-5):(2-4):(2-4):(0.5-2).

7. The secondary battery according to any one of claims 3 to 6, wherein based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 3 is 10%-40%.

8. The secondary battery according to any one of claims 3 to 7, wherein based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 1 is 20%-50%, a molar amount of the structural unit derived from the monomer represented by formula 2 is 10%-40%, and/or a molar amount of the structural unit derived from the monomer represented by formula 4 is 5%-30%.

9. The secondary battery according to any one of claims 1 to 8, wherein a weight-average molecular weight of the polymer is 200,000 to 1,500,000.

10. The secondary battery according to any one of claims 1 to 9, wherein the mass percentage of the negative electrode active material in the negative electrode film layer is 97.0%-97.9%.

11. The secondary battery according to any one of claims 1 to 10, wherein the mass percentage of the first binder in the negative electrode film layer is 0.5%-2%.

12. The secondary battery according to any one of claims 1 to 11, wherein the negative electrode film layer further comprises a second binder; wherein
in the negative electrode film layer, a total mass percentage of the first binder and the second binder is 1%-3%.

13. The secondary battery according to claim 12, wherein a mass percentage of the second binder in the negative electrode film layer is 0.5%-3%.

14. The secondary battery according to claim 12 or 13, wherein the second binder comprises a styrene-butadiene rubber binder and/or a polyacrylic binder.

15. The secondary battery according to any one of claims 12 to 14, wherein the negative electrode film layer further comprises a dispersant; wherein
in the negative electrode film layer, a total mass percentage of the first binder and the dispersant is 0.5%-2%.

16. The secondary battery according to claim 15, wherein a mass percentage of the dispersant in the negative electrode film layer is 0 - 2%.

17. The secondary battery according to claim 15 or 16, wherein in the negative electrode film layer, a total mass percentage of the first binder, the second binder, and the dispersant is 1.5%-2.5%.

18. The secondary battery according to any one of claims 1 to 17, wherein the negative electrode film layer further comprises a conductive agent, and a mass percentage of the conductive agent in the negative electrode film layer is 0.1%-2%.

19. The secondary battery according to any one of claims 1 to 18, wherein the negative electrode active material comprises one or more of artificial graphite, natural graphite, soft carbon, hard carbon, silicon-based material, tin-based material, and lithium titanate.

20. An electric apparatus, comprising the secondary battery according to any one of claims 1 to 19.

21. A binder, comprising a polymer, wherein the polymer comprises -COOM, - CONH₂, -CN, and -COOR, wherein M comprises an alkali metal, and R comprises substituted or unsubstituted C₁-C₂₀ alkyl.

22. The binder according to claim 21, wherein the binder comprises a structural unit derived from a monomer represented by formula 1, a structural unit derived from a monomer represented by formula 2, a structural unit derived from a monomer represented by formula 3, and a structural unit derived from a monomer represented by formula 4: 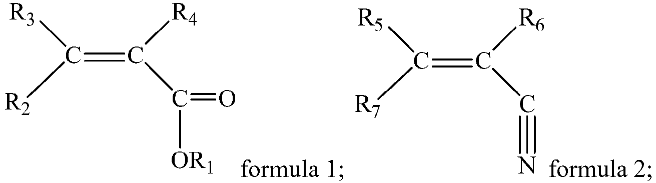 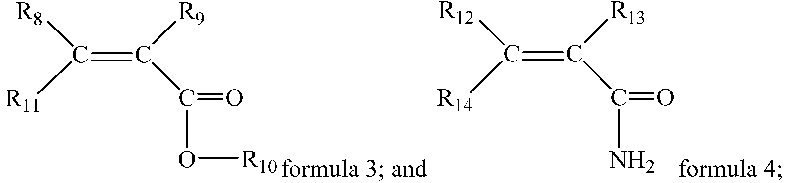
wherein R₁ comprises hydrogen or an alkali metal; and
R₂, R₃, R₄, R₅, R₆, R₇, R₈, R₉, R₁₁ R₁₂, R₁₃, and R₁₄ each independently comprise hydrogen or substituted or unsubstituted C₁-C₆ alkyl; and R₁₀comprises substituted or unsubstituted C₁-C₂₀ alkyl.

23. The binder according to claim 22, wherein R₁ comprises hydrogen; and/or R₂, R₃, R₄, R₅, R₆, R₇, R₈, R₉, R₁₁ R₁₂, R₁₃, and R₁₄ each independently comprise hydrogen; and/or R₁₀ comprises substituted or unsubstituted C₆-C₁₂ alkyl.

24. The binder according to claim 22 or 23, wherein in the binder, a molar ratio of the structural unit derived from the monomer represented by formula 1, the structural unit derived from the monomer represented by formula 2, the structural unit derived from the monomer represented by formula 3, and the structural unit derived from the monomer represented by formula 4 is (2-5):(1-4):(1-4):(0.5-3).

25. The binder according to any one of claims 22 to 24, wherein based on a total molar amount of the structural unit derived from the monomer represented by formula 1, the structural unit derived from the monomer represented by formula 2, the structural unit derived from the monomer represented by formula 3, and the structural unit derived from the monomer represented by formula 4, a molar amount of the structural unit derived from the monomer represented by formula 3 is 10%-40%.

26. The binder according to any one of claims 21 to 25, wherein a weight-average molecular weight of the polymer is 200,000 to 1,500,000.
